# EUROPEAN PATENT APPLICATION

(11) **EP 4 458 501 A1**
(43) Date of publication of application: **06.11.2024**
(21) Application number: 21969984.0
(22) Date of filing: 28.12.2021
(51) Int. Cl.: B23H 7/10

(54) **WIRE ELECTRIC DISCHARGE MACHINE**

(71) Applicant: FANUC CORPORATION, Oshino-mura Minamitsuru-gun Yamanashi 401-0597 (JP)
(72) Inventor: SONG, Shijin, Minamitsuru-gun, Yamanashi 401-0597 (JP)
(74) Representative: Schmidt, Steffen J.
(86) International application number: PCT/JP2021/048808
(87) International publication number: WO 2023/127103

(57) **Abstract**

A wire electric discharge machine (10) for machining a workpiece (W) by generating an electrical discharge by a wire electrode (60), comprises: an upper wire guide (64); a roller (78) that feeds the wire electrode; a pipe (110) through which the wire electrode is inserted and a refrigerant flows; a positive electrode (132) and a negative electrode (134) that contact the wire electrode between the pipe and the upper wire guide in a state in which the positive electrode and the negative electrode are spaced apart from each other in the feeding direction of the wire electrode; and a power supply (140) that applies a cutting voltage between the positive electrode and the negative electrode when cutting the wire electrode.

## Description

### TECHNICAL FIELD

The present invention relates to a wire electrical discharge machine (wire electric discharge machine).

### BACKGROUND ART

JP H06-304819 A discloses a wire electric discharge machine in which a wire electrode is cut by Joule heat between first and second wire cutting electrodes. A wire feed pipe structure is provided between the first and second wire cutting electrodes. The interior of the wire feed pipe structure is constantly cooled by cooling water. Since the annealing effect on the wire electrode is produced inside the wire feed pipe structure, the tendency of the wire electrode to coil or curl is suppressed.

### SUMMARY OF THE INVENTION

The wire electrical discharge machine disclosed in JP H06-304819 A has a problem that the straightness of the wire electrode after cutting is poor in the case of a relatively thin wire electrode.

The present invention has the object of solving the aforementioned problem.

According to one aspect of the present invention, there is provided a wire electrical discharge machine for machining a workpiece by generating electric discharge by a wire electrode, the wire electrical discharge machine including: an upper wire guide configured to support the wire electrode above the workpiece; a roller configured to feed the wire electrode from above the upper wire guide to the upper wire guide; a pipe through which the wire electrode fed from the roller is inserted and through which a cooling medium flows; a positive electrode and a negative electrode configured to be in contact with the wire electrode between the pipe and the upper wire guide in a state of being spaced apart from each other in a feeding direction of the wire electrode; and a power supply configured to apply a cutting voltage between the positive electrode and the negative electrode when the wire electrode is cut.

According to the present invention, the straightness of a relatively thin wire electrode after cutting is maintained suitably.

### BRIEF DESCRIPTION OF DRAWINGS

FIG. 1 is a diagram showing a configuration of a wire electrical discharge machine according to an embodiment;
FIG. 2 is a diagram illustrating how a cutting voltage is applied to a wire electrode; and
FIG. 3 is a diagram illustrating how a cutting voltage is applied to a wire electrode in a modification.

### DETAILED DESCRIPTION OF THE INVENTION

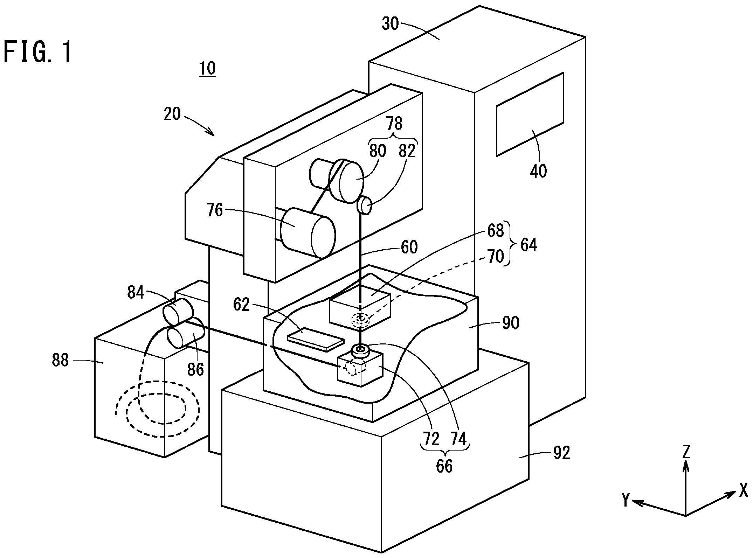

FIG. 1 is a diagram showing a configuration of a wire electrical discharge machine 10 according to an embodiment. The X direction, Y direction, and Z direction shown in FIG. 1 are orthogonal to each other, and gravity acts in the -Z direction. The wire electrical discharge machine 10 includes a main body 20, a machining power supply 30, and a control device 40. The machining power supply 30 applies a voltage to an inter-electrode gap formed between a wire electrode 60 and a workpiece (not shown) to generate electric discharge. The workpiece is supported on a table 62. The wire electrical discharge machine 10 performs electrical discharge machining on the workpiece by generating electric discharge at the inter-electrode gap by the wire electrode 60.

The wire electrical discharge machine 10 causes the wire electrode 60 to move relatively to the workpiece along a machining path specified by a predetermined program, during an electrical discharge machining. The relative movement between the wire electrode 60 and the workpiece is performed by moving the table 62, for example.

The wire electrical discharge machine 10 includes an upper wire guide 64 and a lower wire guide 66. The upper wire guide 64 includes an upper guide block 68, an upper die guide 70, and an upper nozzle (not shown). The lower wire guide 66 includes a lower guide block 72, a lower die guide 74, and a lower nozzle (not shown). The upper wire guide 64 supports the wire electrode 60 above the table 62 and the workpiece (on the +Z direction side). The lower wire guide 66 supports the wire electrode 60 below the table 62 (on the -Z direction side).

The wire electrode 60 is supplied from a wire bobbin 76 in a feeding direction at a predetermined feedrate. The wire electrode 60 is fed via a roller 78, the upper wire guide 64, and the lower wire guide 66. The roller 78 includes a guide roller (not shown), a brake roller 80, and a first pinch roller 82. The roller 78 feeds the wire electrode 60 from above the upper wire guide 64 to the upper wire guide 64. The wire electrode 60 is sandwiched and held between a second pinch roller 84 and a feed roller 86. The wire electrode 60 is collected in a collection box 88.

In the case that wire electrical discharge machining is carried out, a work pan 90 may store a dielectric working fluid. In this case, the table 62, the workpiece, the upper wire guide 64, and the lower wire guide 66 are immersed in the dielectric working fluid. The work pan 90 is disposed on a bed 92.

The control device 40 controls the main body 20 to perform the above-described electrical discharge machining. When the workpiece is exchanged after the electrical discharge machining is finished, the control device 40 controls the main body 20 to cut and feed the wire electrode 60. Also when the machining position on the workpiece is to be changed, the wire electrode 60 is also cut and fed. Further, also when the wire electrode 60 is broken during electrical discharge machining, the wire electrode 60 is newly cut at a position above the broken position and fed.

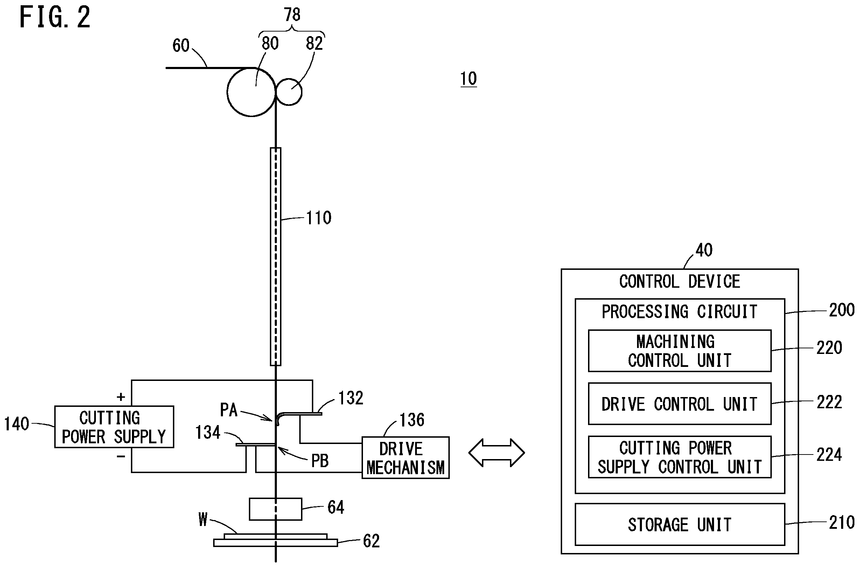

FIG. 2 is a diagram illustrating how a cutting voltage is applied to the wire electrode 60. FIG. 2 shows a workpiece W mounted on the table 62. The upper wire guide 64 supports the wire electrode 60 above the workpiece W.

The wire electrode 60 fed from the roller 78 to the upper wire guide 64 is inserted through a pipe 110. A cooling medium flows through the pipe 110. For cutting the wire electrode 60, the roller 78 rotates in a direction opposite to the direction in which the roller 78 rotates when the wire electrode 60 is fed, and pulls up the wire electrode 60, thereby applying tension to the wire electrode 60.

When the wire electrode 60 is to be cut, a positive electrode 132 and a negative electrode 134 are driven by a drive mechanism 136 and come into contact with the wire electrode 60 below the pipe 110. The positive electrode 132 and the negative electrode 134 are in contact with the wire electrode 60 while being spaced apart from each other in the feeding direction of the wire electrode 60. The positive electrode 132 and the negative electrode 134 are in contact with the wire electrode 60 between the pipe 110 and the upper wire guide 64. The wire electrode 60 and the positive electrode 132 are in contact with each other at a contact position PA. The wire electrode 60 and the negative electrode 134 are in contact with each other at a contact position PB.

The positive terminal of a cutting power supply 140 is connected to the positive electrode 132. The negative terminal of the cutting power supply 140 is connected to the negative electrode 134. The cutting power supply 140 applies a cutting voltage between the positive electrode 132 and the negative electrode 134. The wire electrode 60 is cut by Joule heat generated between the contact position PA of the positive electrode 132 and the contact position PB of the negative electrode 134.

The control device 40 includes a processing circuit 200 and a storage unit 210. The processing circuit 200 includes a processor such as a CPU. The storage unit 210 includes a volatile memory such as a RAM and a non-volatile memory such as a ROM and a flash memory. The storage unit 210 stores programs and the like. The processing circuit 200 executes the program to realize a machining control unit 220, a drive control unit 222, and a cutting power supply control unit 224. At least part of the machining control unit 220, the drive control unit 222, and the cutting power supply control unit 224 may be implemented by an ASIC, an FPGA, or another integrated circuit.

While the workpiece W is being subjected to electrical discharge machining, the machining control unit 220 controls a motor (not shown) to feed the wire electrode 60 from the upper wire guide 64 toward the lower wire guide 66. The machining control unit 220 controls a motor (not shown) to move the wire electrode 60 relative to the workpiece W. The machining control unit 220 controls the machining power supply 30 to generate electric discharge at the inter-electrode gap.

The drive control unit 222 controls the drive mechanism 136 to bring the positive electrode 132 and the negative electrode 134 into contact with the wire electrode 60. The cutting power supply control unit 224 controls the cutting power supply 140 to apply a cutting voltage between the positive electrode 132 and the negative electrode 134. Joule heat is generated between the contact position PA and the contact position PB.

For example, when the conventional technique disclosed in JP H06-304819 A is used, Joule heat is generated even in a section where the wire electrode is inserted in the pipe 110. The cooling medium flows through the pipe 110 along the wire electrode 60. Therefore, the wire electrode 60 is cooled in the section where the wire electrode is inserted in the pipe 110. Therefore, in this section, an annealing effect is obtained, and it is expected to improve the straightness of the wire electrode 60 after cutting.

However, when the wire electrode 60 has a relatively small diameter, for example, equal to or smaller than 0.1 mm, the annealing effect is smaller than in the case of standard diameters exceeding 0.1 mm and accordingly the straightness of the wire electrode 60 after cutting is inferior to that case. In the present embodiment, Joule heat is not generated in the section where the wire electrode 60 is inserted in the pipe 110, and thus the straightness of the wire electrode 60 in this section is maintained after cutting.

A portion of the wire electrode 60 where Joule heat is generated is limited to the section between the contact position PA and the contact position PB. The length of the portion of the wire electrode 60 inserted in the pipe 110 is several tens of centimeters, whereas the length of the section between the contact position PA and the contact position PB is several centimeters. Therefore, the section in which the straightness of the cut wire electrode 60 is impaired is limited to a relatively short section, i.e., the section between the contact position PA and the contact position PB.

### [Modification]

The above-described embodiment may be modified in the following manner.

In the above embodiment, for cutting the wire electrode 60 having a relatively small diameter, the cutting power supply 140 applies the cutting voltage between the positive electrode 132 and the negative electrode 134. However, for cutting the wire electrode 60 having a standard diameter exceeding 0.1 mm, for example, the cut voltage may be applied to the section where the wire electrode 60 is inserted in the pipe 110. When Joule heat is generated in the section where the wire electrode is inserted in the pipe 110, the wire electrode 60 is subjected to an annealing effect due to cooling, so that the straightness of the wire electrode 60 is improved.

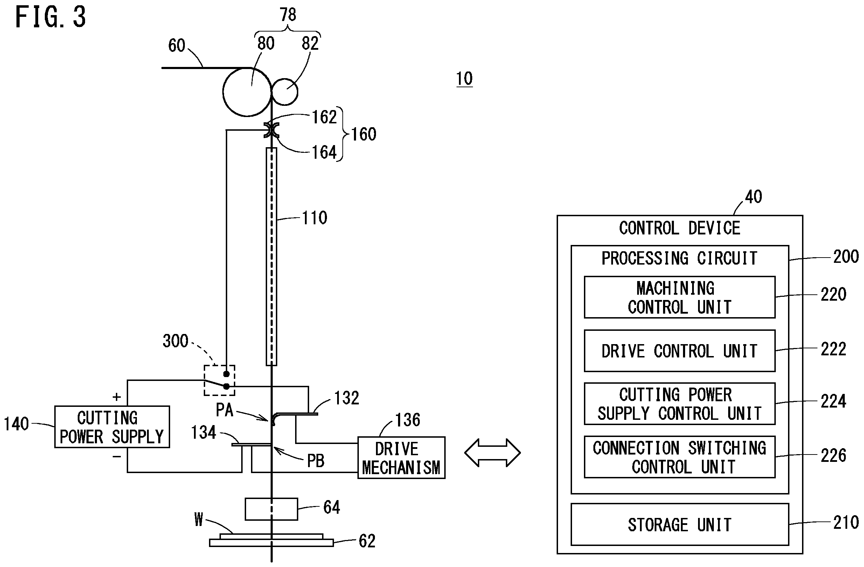

FIG. 3 is a diagram illustrating how a cutting voltage is applied to the wire electrode 60 in a modification. Description of members shown in FIG. 3 that are denoted by the same reference numerals as those of the members shown in FIG. 2 will be omitted. A chuck 160 is disposed between the roller 78 and the pipe 110. The chuck 160 has a pair of clamp electrodes 162 and 164.

When the wire electrode 60 having a standard diameter is to be cut, the chuck 160 clamps the wire electrode 60 by the pair of clamp electrodes 162 and 164, thereby holding the wire electrode 60. The cutting power supply 140 applies a cutting voltage between at least one of the pair of clamp electrodes 162, 164 and the negative electrode 134. The wire electrode 60 is cut by Joule heat generated between the pipe 110, which is not cooled, and the negative electrode 134.

When the wire electrode 60 having a relatively small diameter is cut, the wire electrode 60 is not clamped by the pair of clamp electrodes 162 and 164. As described in the above embodiment, the cutting power supply 140 applies the cutting voltage between the positive electrode 132 and the negative electrode 134.

FIG. 3 shows a connection switching control unit 226 and a switch 300. The connection switching control unit 226 is realized by the processing circuit 200 of the control device 40 executing a program. The connection switching control unit 226 may be realized by an ASIC, an FPGA, or another integrated circuit. The switch 300 switches the connection destination of the positive terminal of the cutting power supply 140 between the positive electrode 132 and the clamp electrode 162. The switch 300 may connect the positive terminal of the cutting power supply 140 to the clamp electrode 164 instead of the clamp electrode 162 or in addition to the clamp electrode 162.

For cutting the wire electrode 60, the user inputs, to the control device 40, wire diameter information regarding the size of the diameter of the wire electrode 60. The connection switching control unit 226 of the control device 40 controls the switch 300 to select the connection destination of the positive electrode of the cutting power supply 140, in accordance with the wire diameter information. For cutting the wire electrode 60 having a relatively small diameter of 0.1 mm or less, the connection switching control unit 226 controls the switch 300 to connect the positive electrode of the cutting power supply 140 to the positive electrode 132. For cutting the wire electrode 60 having a standard diameter exceeding 0.1 mm, the connection switching control unit 226 controls the switch 300 to connect the positive electrode of the cutting power supply 140 to the clamp electrode 162.

The connection switching control unit 226 of the control device 40 may control the switch 300 to select the connection destination of the positive electrode of the cutting power supply 140, in accordance with material information about the material of the wire electrode 60. For cutting the wire electrode 60 made of a material having a low annealing effect, the connection switching control unit 226 controls the switch 300 to connect the positive terminal of the cutting power supply 140 to the positive electrode 132. For cutting the wire electrode 60 made of a material having a high annealing effect, the connection switching control unit 226 controls the switch 300 to connect the positive terminal of the cutting power supply 140 to the clamp electrode 162. The material information is input to the control device 40 by the user.

### [Invention that can be Obtained from Embodiment]

The inventions that can be grasped from the above-described embodiment and the modifications thereof will be described below.

(1) The wire electrical discharge machine (10) machines the workpiece (W) by generating electric discharge by the wire electrode (60). The wire electrical discharge machine includes: the upper wire guide (64) configured to support the wire electrode above the workpiece; the roller (78) configured to feed the wire electrode from above the upper wire guide to the upper wire guide; the pipe (110) through which the wire electrode fed from the roller is inserted and through which the cooling medium flows; the positive electrode (132) and the negative electrode (134) configured to be in contact with the wire electrode between the pipe and the upper wire guide in a state of being spaced apart from each other in the feeding direction of the wire electrode; and the power supply (140) configured to apply a cutting voltage between the positive electrode and the negative electrode when the wire electrode is cut. With this configuration, the relatively thin wire electrode can maintain good straightness after cutting.
(2) The wire electrical discharge machine may further include the drive mechanism (136) configured to bring the positive electrode and the negative electrode into contact with the wire electrode when the wire electrode is cut. This makes it possible to easily apply the cutting voltage to the wire electrode.
(3) The wire electrical discharge machine may further include the chuck (160) including the pair of clamp electrodes (162, 164) and configured to clamp the wire electrode between the roller and the pipe by the pair of clamp electrodes; and the switch (300) configured to switch the connection destination of the positive terminal of the power supply between the positive electrode and at least one of the pair of clamp electrodes. Thus, the straightness of the wire electrode after cutting is maintained in a favorable manner regardless of the diameter of the wire electrode to be cut.
(4) The wire electrical discharge machine may further include the connection switching control unit (226) configured to control the switch to switch the connection destination of the positive terminal in accordance with the diameter of the wire electrode or the material of the wire electrode. It is possible to perform the switching according to the type of wire electrode and to suitably maintain the straightness of the wire electrode after cutting.

### Reference Signs List

10: wire electrical discharge machine
20: main body
30: machining power supply
40: control device
60: wire electrode
62: table
64: upper wire guide
66: lower wire guide
68: upper guide block
70: upper die guide
72: lower guide block
74: lower die guide
76: wire bobbin
78: roller
80: brake roller
82: first pinch roller
84: second pinch roller
86: feed roller
88: collection box
90: work pan
92: bed
110: pipe
132: positive electrode
134: negative electrode
136: drive mechanism
140: cutting power supply
160: chuck
162, 164: clamp electrode
200: processing circuit
210: storage unit
220: machining control unit
222: drive control unit
224: cutting power supply control unit
226: connection switching control unit
300: switch

## Claims

1. A wire electrical discharge machine (10) for machining a workpiece (W) by generating electric discharge by a wire electrode (60), the wire electrical discharge machine comprising:
an upper wire guide (64) configured to support the wire electrode above the workpiece;
a roller (78) configured to feed the wire electrode from above the upper wire guide to the upper wire guide;
a pipe (110) through which the wire electrode fed from the roller is inserted and through which a cooling medium flows;
a positive electrode (132) and a negative electrode (134) configured to be in contact with the wire electrode between the pipe and the upper wire guide in a state of being spaced apart from each other in a feeding direction of the wire electrode; and
a power supply (140) configured to apply a cutting voltage between the positive electrode and the negative electrode when the wire electrode is cut.

2. The wire electrical discharge machine according to claim 1, further comprising:
a drive mechanism (136) configured to bring the positive electrode and the negative electrode into contact with the wire electrode when the wire electrode is cut.

3. The wire electrical discharge machine according to claim 1 or 2, further comprising:
a chuck (160) including a pair of clamp electrodes (162, 164) and configured to clamp the wire electrode between the roller and the pipe by the pair of clamp electrodes; and
a switch (300) configured to switch a connection destination of a positive terminal of the power supply between the positive electrode and at least one of the pair of clamp electrodes.

4. The wire electrical discharge machine according to claim 3, further comprising:
a connection switching control unit (226) configured to control the switch to switch the connection destination of the positive terminal in accordance with a diameter of the wire electrode or a material of the wire electrode.
